(19) **Europäisches Patentamt**

**European Patent Office**

**Office européen des brevets**

(11) **EP 1 067 774 B1**

(12) **EUROPEAN PATENT SPECIFICATION**

(45) Date of publication and mention
of the grant of the patent:
**10.11.2004 Bulletin 2004/46**

(51) Int Cl.⁷: **H04N 1/40**, H04N 5/14,
H04N 5/208, G06T 3/40

(21) Application number: **00112971.7**

(22) Date of filing: **20.06.2000**

(54) **Pixel interpolation method and circuit**

Verfahren und Schaltung zur Pixelinterpolation

Méthode et circuit d'interpolation de pixels

(84) Designated Contracting States:
**DE FR**

(30) Priority: **23.06.1999 JP 17709799**

(43) Date of publication of application:
**10.01.2001 Bulletin 2001/02**

(73) Proprietor: **NEC CORPORATION
Tokyo (JP)**

(72) Inventor: **Nagata, Hiroshi
Minato-ku, Tokyo (JP)**

(74) Representative: **Betten & Resch
Postfach 10 02 51
80076 München (DE)**

(56) References cited:
**EP-A- 0 758 179       US-A- 5 054 100
US-A- 5 467 439**

• **JENSEN K ET AL: "SUBPIXEL EDGE
LOCALIZATION AND THE INTERPOLATION OF
STILL IMAGES" IEEE TRANSACTIONS ON
IMAGE PROCESSING, IEEE INC. NEW YORK,
US, vol. 4, no. 3, 1 March 1995 (1995-03-01),
pages 285-295, XP000501903 ISSN: 1057-7149**

## Description

## BACKGROUND OF THE INVENTION

The present invention relates to a method of newly generating a pixel by means of interpolation by using four-point pixels of a video signal converted into a digital signal.

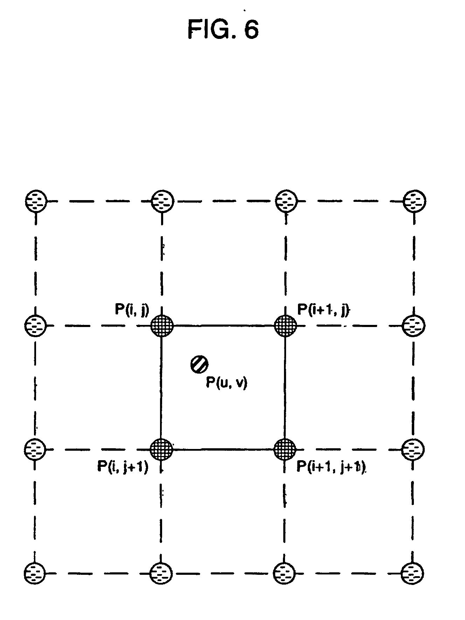

A conventional pixel interpolation method will be explained by means of Fig. 6.

A point P(u, v) shown in Fig. 6 shows a pixel to be newly generated by means of interpolation. Also, P(i, j), P(i+1, j), P(i, j+1), P(i+1, j+1) are video signals to which A/D conversion is applied, and show four pixels adjacent to the pixel P(u, v) to be generated by means of interpolation.

In an interpolation method called a bilinear interpolation method or bilinear interpolation method, pixel conversion of the pixel P(u, v) is conducted in accordance with the following equation:

$$P(u, v) = \{(i+1)-u\}\{(j+1)-v\}P(i, j)$$

$$+ (u-i)\{(j+1)-v\}P(i+1, j)$$

$$+ \{(i+1)-u\}\{v-j\}P(i, j+1)$$

$$+ \{(u-i)(v-j)\}P(i+1, j+1) \qquad (1)$$

Where, for example, even in case that, in P(i, j), there is a signal having a high level close to a white peak level, and that there are signals having a low level in which levels of other three points are close to a black level, P(u, v) is obtained by multiplying levels of the adjacent four pixels before interpolation by values that are simply in inverse proportional to spatial distances. Now, assuming that

$$\{(i+1)-u\} = 0.5$$

$$\{(j+1)-v\} = 0.5,$$

the P(u, v) to be interpolated is obtained by adding values obtained by dividing the adjacent four pixels by four, respectively. In other words, since, in an edge part, an edge component is smoothed by four points of the pixels, an image makes a blurry impression as a whole.

Also, as an interpolation method in which an image having less blurry impression can be obtained, there are a bicubic interpolation method as shown in "pp208-209, Image Processing Standard Textbook Published by Foundation, Image Information Education Promotion Society", a method in which a DCT and an ultra-resolution method are combined, as shown in "Shingakuron, Vol. J76-D-II, No.9 pp1392-1940 (1993) Expansion Of A High Quality Image In Which An Iterative Method of Gerchberg-Papoulis Using A DCT Is Applied", and a method using a waveletlet analysis as shown in "Shingakuron, Vol. J79-D-II, No.5 pp.819-825 (1993) Expansion Of A Digital Image Using A Multi-resolution Analysis". Although, in these methods, pixel density conversion can be conducted while an edge component is comparatively maintained, compared with a bilinear interpolation method, several times to several ten times as large as the number of memories and a large hardware arrangement are needed. Since these methods do not have relation to the present invention directly, detailed arrangements thereof will be omitted.

In the above-mentioned conventional image conversion method by means of the bilinear interpolation method, since smoothing is conducted to values that are inverse proportion to distances between a pixel to be generated by means of interpolation and four pixels used for the interpolation, which are adjacent thereto, there is a task that a blurry impression is made for an image including an edge component.

Also, although, as a method in which the interpolation can be conducted while an edge component is comparatively maintained, there are the bicubic interpolation method, the method in which the DCT and the ultra-resolution method are combined, and the method in which the wavelet analysis is used, there is a task that these methods become to need a large hardware arrangement.

US 5 054 100 discloses an edge preserving interpolation method using edge strength modifying factors to modify interpolation weighting factors in the horizontal, vertical, and diagonal directions.

## SUMMARY OF THE INVENTION

The present invention is made to solve the above-mentioned problems.

Moreover, the objective of the present invention is to provide a pixel interpolation method and circuit capable of obtaining an image having less blurry impression by means of a small-scale hardware arrangement.

A pixel interpolation method of the present invention has steps of:

detecting existence of an edge component of an image from four pixels adjacent to a pixel to be newly generated by means of interpolation, and in case that the edge component exists, further detecting that the edge component is which kind of edge component out of a skew edge, a longitudinal edge and a transversal edge;
generating weighting coefficients for the adjacent four pixels from a spatial position relation between the above-described pixel to be generated and the adjacent four pixels and from the kind of the detected edge component, so that said coefficients become small for a pixel which can be the cause of damaging the edge component;
multiplying pixel values of the adjacent four pixels by the respective selected coefficients; and
conducting pixel-conversion of the above-described pixel to be generated by applying a bilinear interpolation method to the above-described multiplied result.

Moreover, a pixel interpolation circuit of the present invention comprises:

an edge detecting circuit for obtaining a difference of levels between two pixels of four pixels adjacent to a pixel to be newly generated by means of interpolation, detecting existence of an edge component, and in case that the edge component exists, detecting that the edge component is which kind of edge component out of a skew edge, a longitudinal edge and a transversal edge;
a position detecting circuit for obtaining a spatial position relation of said pixel to be generated for said adjacent four pixels;
a coefficient generating circuit for generating weighting coefficients for the adjacent four pixels from a spatial position relation between said pixel to be generated and the adjacent four pixels and from the kind of the detected edge component, so that said coefficients become small for a pixel which can be the cause of damaging the edge component;
a multiplier for multiplying pixel values of the adjacent four pixels by the respective selected coefficients; and
a pixel converting circuit for conducting pixel-conversion of said pixel to be generated by applying a bilinear interpolation method to said multiplied result.

By detecting an edge component of a skew edge, a longitudinal edge and a transversal edge from the four pixels adjacent to the pixel to be generated, adaptively changing the weighting of the pixel which can be the cause of damaging an edge component, based on the detected edge and a spatial position of the pixel to be generated, and conducting pixel-conversion, even in case of conducting interpolation in a video including an edge component, interpolation processing can be conducted while an edge component is maintained.

**BRIEF DESCRIPTION OF THE INVENTION**

This and other objects, features, and advantages of the present invention will become more apparent upon a reading of the following detailed description and drawings, in which:

Fig. 1 is a circuit diagram of a pixel interpolation circuit of one embodiment of the present invention,
Fig. 2 is a view showing a relation between an edge component and a weighting coefficient to be set,
Fig. 3 is a view showing a relation between an edge component and a weighting coefficient to be set,
Fig. 4 is a view showing a relation between an edge component and a weighting coefficient to be set,
Fig. 5 is a graph showing a relation between a horizontal/vertical spatial distance and weighting,
Fig. 6 is a view showing a pixel to be interpolated and four pixels adjacent thereto and
Fig. 7 is a table 1.

**DESCRIPTION OF THE EMBODIMENTS**

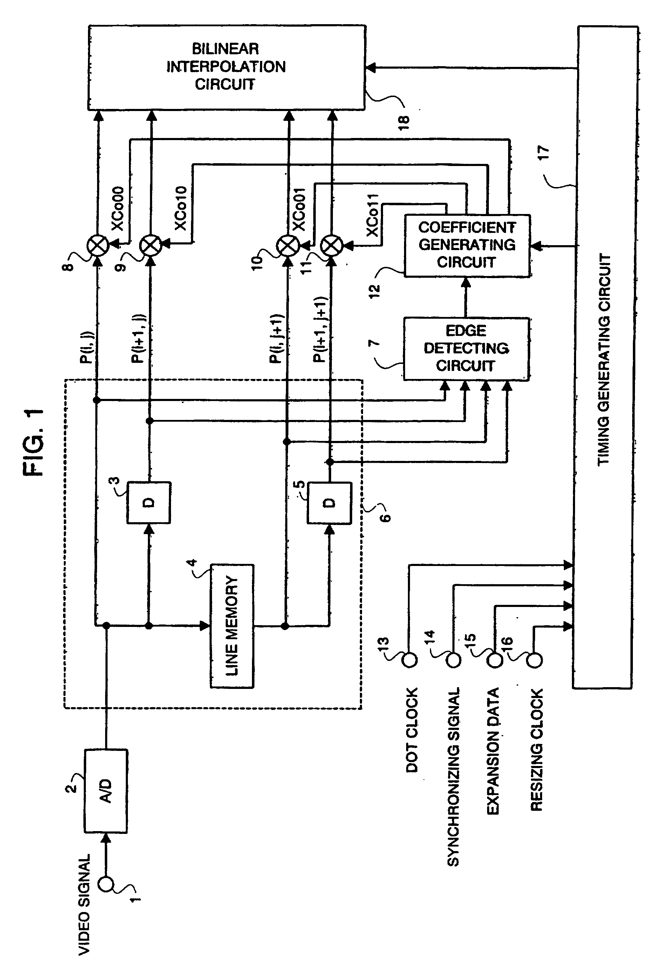

Next, embodiments of the present invention will be explained by referring to drawings.
Referring to Fig. 1, a pixel converting circuit of one embodiment of the present invention is constructed of an input terminal 1, an A/D converter 2, D flip-flops 3 and 5, a line memory 4, an edge detecting circuit 7, multipliers 8 - 11, a coefficient generating circuit 12, input terminals 13 - 16, a timing generating circuit 17, and a bilinear interpolation circuit 18.
A video signal is input from the input terminal 1, and is converted into a digital signal from an analog signal in the A/D converter 2.
The video signal which was converted into the digital signal is expanded in a two-dimensional expansion circuit 6 consisted of the D flip-flops 3 and 5, and the line memory 4, and is sent to the edge detecting circuit 7 and the multipliers 8, 9, 10 and 11.
In the edge detecting circuit 7, a difference of respective levels between four pixels adjacent to a pixel to be interpolated, namely, between all pixels in a horizontal direction, a vertical direction and a diagonal direction is obtained. In the edge detecting circuit 7, certain two threshold values are set previously. The first is a threshold value having a high value for supposing an edge in case that a level difference between two pixels exceeds this value, and the second is a threshold value having a low value for supposing that a level difference between two pixels has an approximate value in case that the level difference does not exceed this value. In addition, for reducing a circuit scale, the processing can be conducted without obtaining a level difference between the pixels or between the two pixels in any one direction of a horizontal direction, a vertical direction and a diagonal direction.
In case that a value of only one certain pixel has a projecting value which exceeds the threshold vale of a high value for values of other three pixels, and respective difference values of the other three pixels have approximate values which do not exceed the threshold value of a low value, it is determined that, since the first pixel has an isolated value out of the four pixels, it is a skew edge component.
Also, if a level difference between the pixels in a horizontal direction is less than the threshold value having a low value, and a level difference between the pixels in a vertical direction exceeds the threshold value having a high value, it is determined that the edge is a longitudinal edge. In the same manner, if a level difference between the pixels in a vertical direction is less than the threshold value having a low value, and a level difference between the pixels in a horizontal direction exceeds the threshold value having a high value, it is determined that the edge is a transversal edge.

A result obtained in the edge detecting circuit 7 is sent to the coefficient generating circuit 12.

On the other hand, a dot clock, a synchronizing signal consisted of a horizontal synchronizing signal and a vertical synchronizing signal, an expansion rate data consisted of a horizontal expansion rate for designating a ratio of an expansion or reduction in a horizontal direction and a vertical expansion rate for designating a ratio of an expansion or reduction in a vertical direction, and a clock for resizing are input to the input terminals 13, 14, 15 and 16, respectively, and are sent to the timing generating circuit 17.

The timing generating circuit 17 is cleared by the horizontal synchronizing signal, and has a counter therein for counting a dot clock of a signal to be input, and can determine a spatial position relation in a horizontal direction between four pixels and a pixel to be generated by interpolation, namely, a value of u of P(u, v) from a value of the counter and the horizontal expansion rate data. For example, in case of converting the number of pixels in a horizontal direction from 640 pixels to 800 pixels, its expansion rate becomes to be 800/600 = 5/4. If it is assumed that a spatial distance between pixels of the input signal is 1, since a spatial distance of a pixel to be output becomes to be 4/5, a spatial position u of the output pixel becomes to be 4/5 x n (n = 0, 1, ⋯⋯). In other words, after the vale of u is cleared at the fall of the horizontal synchronizing signal, 4/5 is added thereto every time the clock for resizing is input, and an integer part of the value shows a value of i in the equation (1), and a decimal part becomes to show a value of u-i. Also, the timing generating circuit 17 has a counter for counting a horizontal synchronizing signal, and in the same manner, it can determine a spatial position relation in a vertical direction between four pixels and a pixel to be generated by interpolation, namely, a value of v of P(u, v) from a value of the counter and the vertical expansion rate data.

Information of the existence of an edge, and information that, in case that an edge exists, it is which edge out of a right skew edge, a left skew edge, a longitudinal edge and a transversal edge are input to the coefficient generating circuit 12 from the edge detecting circuit 7. Further, information of a spatial position of the pixel P(u, v) to be interpolated is input to the coefficient generating circuit 12 from the timing generating circuit 17.

By using the information, the coefficient generating circuit 12 selects coefficients for pixels which can be the cause of damaging an edge component so that weighting of the pixels becomes small, and the coefficients Co00, Co10, Co01 and Co11 are transmitted to the multipliers 8, 9, 10 and 11.

The multipliers 8, 9, 10 and 11 multiply the original video signals by the coefficients Co00, Co10, Co01 and Co11 output from the coefficient generating circuit 12, respectively, and results thereof are output to a pixel conversion circuit 18.

In addition to the dot clocks before the pixel conversion and after pixel conversion, information of a spatial position relation between a pixel before the interpolation and a pixel to be interpolated is input to the bilinear interpolation circuit 18 from the timing generating circuit 17, and the bilinear interpolation circuit conducts an operation of the Equation (1) and generates a pixel of an object.

Next, this embodiment will be mentioned in detail.

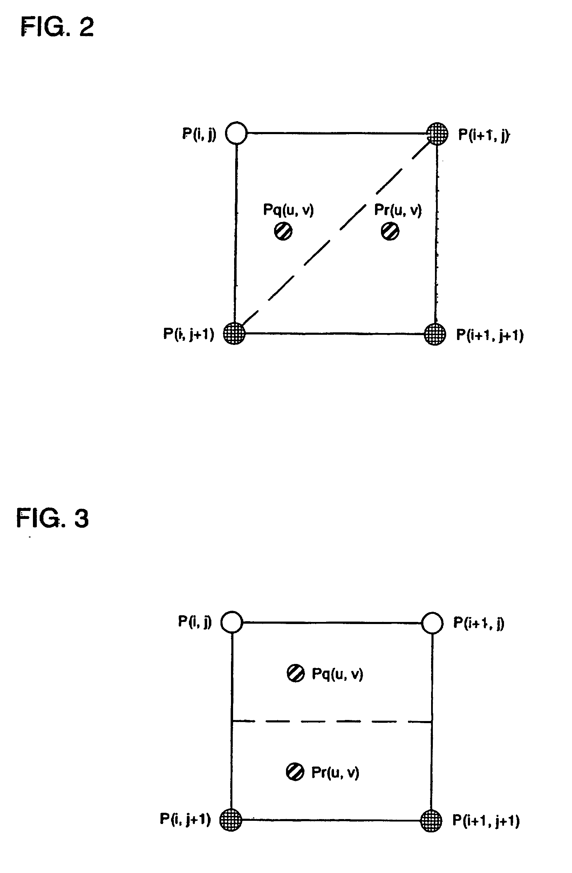

In Fig. 2, P(i, j) has a level close to a white peak, and other three pixels P(i+1, j), P(i, j+1) and P(i+1, j+1) have levels close to a black level. Since the pixel P(i, j) in this case has an isolated level, a video has a skew edge component.

Here, in case that a pixel Pq(u, v) to be generated is located at a position of $\{(i+1)-u\}+\{(j+1)-v\} > 1$ as shown in Fig. 2, in order to make weighting of P(i+1, j+1) small, the coefficient Co11 to be sent to the multiplier 11 to which the pixel P(i+1, j+1) is input is set to 0.5, the coefficient Co00 to be sent to the multiplier 8 to which the pixel P(i, j) is input is set to 1.25, and the coefficient Co10 and the coefficient Co01 to be sent to the multipliers 9 and 10 to which other pixels are input are set to 1.125.

By setting the coefficients in this manner, since a generated pixel Pq has a value close to the pixel P(i, j), and has a value far from P(i+1, j+1), in case of interpolating a video having a skew edge component, the edge component can be maintained.

Also, in Fig. 2, a case in which, as shown, a pixel Pr(u, v) to be generated is located at a position of $\{(i+1)-u\}+\{(j+1)-v\} < 1$ will be explained.

In case that the pixel Pr(u, v) to be generated is located at a position of $\{(i+1)-u\}+\{(j+1)-v\} < 1$ as shown in Fig. 2, in order to make weighting of P(i, j) small, the coefficient Co00 to be sent to the multiplier 8 to which the pixel P(i, j) is input is set to 0.5, the coefficient Co11 to be sent to the multiplier 11 to which the pixel P(i+1, j+1) located at a diagonal position is input is set to 1.25, and the coefficient Co10 and the coefficient Co01 to be sent to the multipliers 9 and 10 to which other pixels are input are set to 1.125.

By setting the coefficients in this manner, since a generated Pr has a value close to the pixel P(i+1, j+1), and has a value far from P(i, j), in case of interpolating a video having a skew edge component, the edge component can be maintained.

Also, in case that a pixel to be generated is located at a position of $\{(i+1)-u\}+\{(j+1)-v\} = 1$, any one of the above-described two coefficients may be used.

Next, in Fig. 3, a longitudinal edge is formed, in which pixels P(i, j) and P(i+1, j) have levels close to a white peak, and P(i, j+1) and P(i+1, j+1) have levels close to a black level. At this time, in case that a pixel Pq(u, v) to be generated is located at a position of {(j+1)-v} > 0.5 as shown, the coefficients Co01 and Co11 to be sent to the multipliers 10 and 11 to which the pixels P(i, j+1) and P(i+1, j+1) are input are set to 0.5, and the coefficients Co00 and Co10 to be sent to the multipliers 8 and 9 to which other two pixels are input are set to 1.5.

Also, in case that a pixel Pr(u, v) to be generated is located at a position of {(j+1)-v} < 0.5 as shown in Fig. 3, the coefficients Co00 and Co10 to be sent to the multipliers 8 and 9 to which P(i, j) and P(i+1, j) are input are set to 0.5, and the coefficients Co01 and Co11 to be sent to the multipliers 9 and 11 to which other two pixels are input are set to 1.5.

In this manner, since the pixel Pq(u, v) to be generated becomes difficult to be affected by P(i, j+1) and P(i+1, j+1), and Pr(u, v) becomes difficult to be affected by P(i, j) and P(i+1, j), it becomes to be possible to conduct pixel conversion under condition in which a longitudinal edge component is maintained. Also, in case of interpolating and generating a pixel located at a distance of {(j+1)-v} = 0.5, any one of the above-described coefficients may be used.

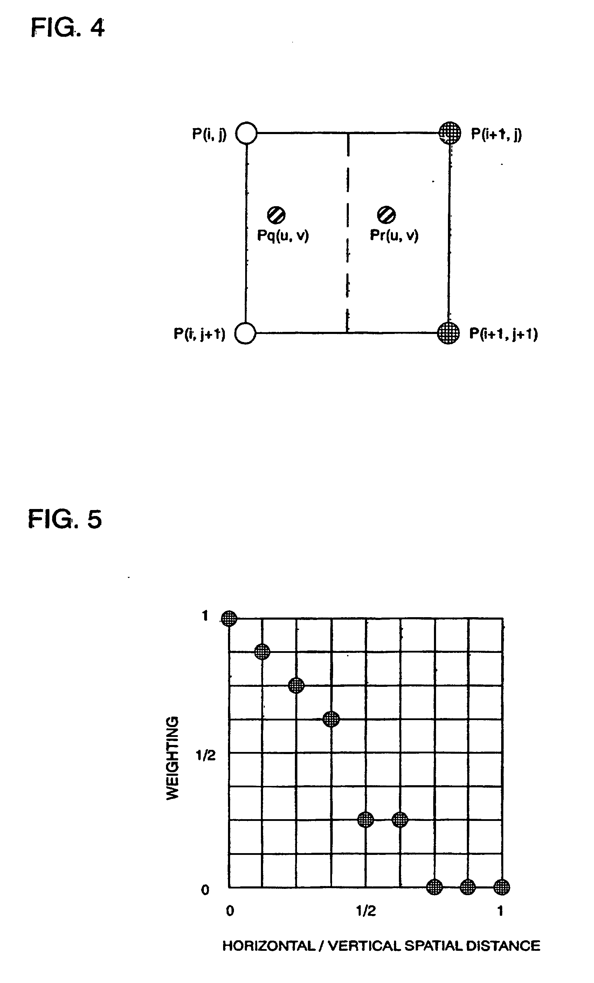

Further, in Fig. 4, a transversal edge is formed, in which pixels P(i, j) and P(i, j+1) have levels close to a white peak level, and P(i+1, j) and P(i+1, j+1) have levels close to a black level. At this time, in case that a pixel Pq(u, v) to be generated is located at a position of {(i+1)-u)} > 0.5 as shown, the coefficients Co10 and Co11 to be sent to the multipliers 9 and 11 to which P(i+1, j) and P(i+1, j+1) are input are set to 0.5, and the coefficients Co00 and Co01 to be sent to the multipliers 8 and 10 to which other two pixels are input are set to 1.5.

Also, in case that a pixel Pr(u, v) to be generated is located at a position of {(i+1)-u)} < 0.5 as shown in Fig. 4, the coefficients Co00 and Co01 to be sent to the multipliers 8 and 10 to which the pixels P(i, j) and P(i, j+1) are input are set to 0.5, and the coefficients Co10 and Co11 to be sent to the multipliers 9 and 11 to which other two pixels are input are set to 1.5.

In this manner, since the pixel Pq(u, v) to be generated becomes difficult to be affected by P(i+1, j) and P(i+1, j+1), and Pr(u, v) becomes difficult to be affected by P(i, j) and P(i, j+1), it becomes to be possible to conduct pixel conversion under condition in which a transversal edge component is maintained. Also, in case of interpolating and generating a pixel located at a distance of {(i+1)-u)} = 0.5, any one of the above-described coefficients may be used.

Furthermore, the edge detecting circuit 7 in Fig. 1 can be constructed as follows: In Fig. 6, assuming that a difference of levels between adjacent pixels is

$$P(i, j) - P(i+1, j) = a$$

$$P(i+1, j) - P(i+1, j+1) = b$$

$$P(i+1, j+1) - P(i, j+1) = c$$

$$P(i, j+1) - P(i, j) = d,$$

as shown in Table 1, when each condition is satisfied, each kind of edge of a longitudinal edge, a transversal edge and a skew edge can be detected, respectively.

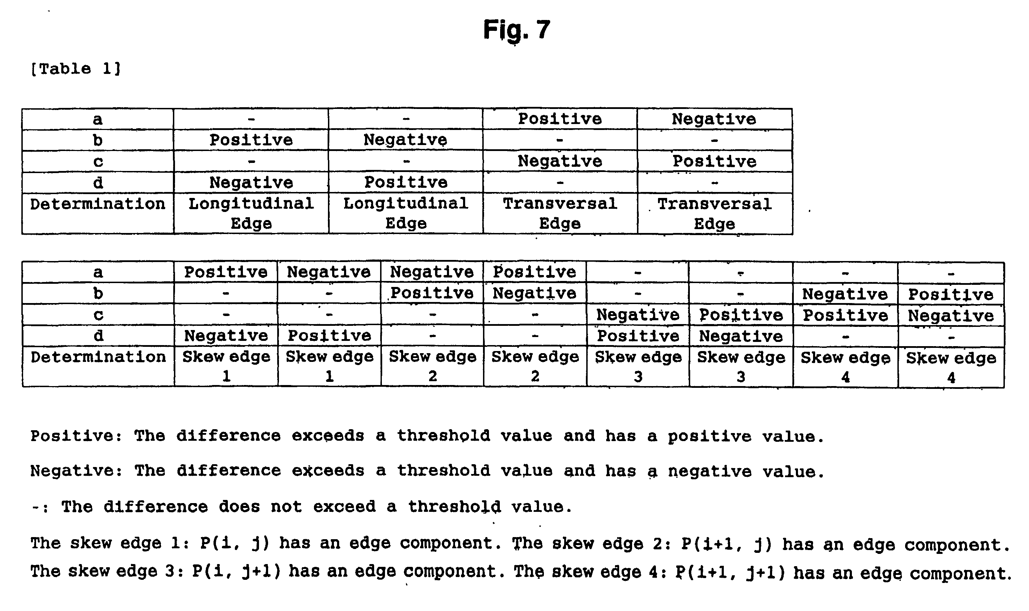

Fig. 7 is a table 1. In addition, the "positive" in Table 1 means that a difference value between pixels exceeds a threshold value having a high level, which is set in the edge detecting circuit 7, for example, 64 in case that a video signal is A/D-converted into eight bits, and means that it has a positive value. Also, the "negative" in the Table means that it exceeds the threshold value having a high level, which is set in the edge detecting circuit 7, and means that it has a negative value.

The "-" in the Table means that a difference value between pixels does not exceed another threshold value having a low level, which is set in the edge detecting circuit 7, for example, 16 in case that a video signal is A/D-converted into eight bits.

In addition, on the above-described embodiment, although the explanation was made assuming that an arrangement of the pixel interpolation circuit (the edge detecting circuit 7, the multipliers 8 - 11, the coefficient generating circuit 12, and the bilinear interpolation circuit 18 is fixed, a method can be adopted, in which, without using the multipliers, a look-up table is used and the table is made to be variable. In other words, for a pixel which can be a factor of the cause of damaging an edge component, interpolation is conducted by using a table in which a relation shown in Fig. 5 between a spatial distance and weighting becomes to be non-linear, and the interpolation can be realized by making the look-up table variable based on the existence of an edge component or a direction of an edge. Also, by constituting a coefficient output from the coefficient generating circuit 12 by means of the minus n-th power of 2 (n is zero or a natural number.), and a value which is obtained by adding them to each other, it is possible to form a multiplier by means of a bit shift and an adder.

Also, in case of conducting interpolation in which, for a signal for conducting an interlaced scan, the line number is made to be changed, and interlace/non-interlace conversion is concurrently conducted, there is a case in which an offset is applied to a spatial position of a pixel to be generated, which depends on a field. This is because, if the offset is not applied, the spatial position of the pixel to be generated shifts between fields, and a line flicker occurs.

Since, in case of conducting the interpolation by using such an offset, there is a case in which, by using a method in accordance with the present invention, a line flicker is increased, in case of concurrently conducting the interlace/non-interlace conversion, it is possible to detect only a horizontal edge and conduct the processing.

As explained above, in the present invention, by detecting an edge component of a skew edge, a longitudinal edge and a transversal edge from the four pixels adjacent to the pixel to be generated, adaptively changing the weighting of the pixel which can be the cause of damaging an edge component, based on the detected edge and a spatial position of the pixel to be generated, and conducting pixel-conversion, even in case of conducting interpolation in a video including an edge component, interpolation processing can be conducted by a small-scale circuit while an original edge component is maintained.

**Claims**

1. A pixel interpolation method comprising steps of:

   detecting existence of an edge component of an image from four pixels adjacent to a pixel to be newly generated by means of interpolation, and in case that the edge component exists, further detecting that the edge component is which kind of edge component out of a skew edge, a longitudinal edge and a transversal edge;
   generating weighting coefficients for the adjacent four pixels from a spatial position relation between said pixel to be generated and the adjacent four pixels and from the kind of the detected edge component, so that said coefficients become small for a pixel which can be the cause of damaging the edge component;
   multiplying pixel values of the adjacent four pixels by the respective selected coefficients; and
   conducting pixel-conversion of said pixel to be generated by applying a bilinear interpolation method to said multiplied result.

2. A pixel interpolation method according to claim 1, wherein said step of detecting existence of an edge component determines that the adjacent four pixels have skew edges in case that a difference of levels between certain one pixel and other three pixels exceeds a first threshold value of a high value, and a difference of levels between other three pixels is less than a second threshold value of a low value, and determines that the adjacent four pixels have longitudinal edges if a level difference between the pixels in a horizontal direction is less than the second threshold value, and a level difference between the pixels in a vertical direction exceeds the first threshold value, and determines that the adjacent four pixels have transversal edges if a level difference between the pixels in a vertical direction is less than the second threshold value, and a level difference between the pixels in a horizontal direction exceeds the first threshold value.

3. A pixel interpolation method according to claim 1, wherein said spatial position relation of said four pixels is obtained as a spatial position relation in a horizontal direction and a vertical direction of the adjacent four pixels and the pixel to be generated from a horizontal synchronizing signal and a horizontal expansion rate, and a vertical synchronizing signal and a vertical expansion rate.

4. A pixel interpolation method comprising steps of:

   detecting existence of an edge component of an image from four pixels adjacent to a pixel to be newly generated by means of interpolation, and in case that the edge component exists, further detecting that the edge component is which kind of edge component out of a skew edge, a longitudinal edge and a transversal edge;
   generating weighting coefficients for the adjacent four pixels from a spatial position relation between said pixel to be generated and the adjacent four pixels and from the kind of the detected edge component by using a look-up table for showing a relation between a spatial position relation of the pixel to be generated and the weighting coefficients so that said coefficients become small for a pixel which can be the cause of damaging the edge component; and
   conducting pixel-conversion of said pixel to be generated by realizing a bilinear interpolation method by means of the look-up table, and combining the look-up table for conducting the bilinear interpolation and the look-up table of said coefficient generating circuit into one look-up table.

5. A pixel interpolation method according to claim 4, wherein said step of detecting existence of an edge component determines that the adjacent four pixels have skew edges in case that a difference of levels between certain one pixel and other three pixels exceeds a first threshold value of a high value, and a difference of levels between other three pixels is less than a second threshold value of a low value, and determines that the adjacent four pixels have longitudinal edges if a level difference between the pixels in a horizontal direction is less than the second threshold value, and a level difference between the pixels in a vertical direction exceeds the first threshold value, and determines that the adjacent four pixels have transversal edges if a level difference between the pixels in a vertical direction is less than the second threshold value, and a level difference between the pixels in a horizontal direction exceeds the first threshold value.

6. A pixel interpolation method according to claim 4, wherein said spatial position relation of said four pixels is obtained as a spatial position relation in a horizontal direction and a vertical direction of the adjacent four pixels and the pixel to be generated from a horizontal synchronizing signal and a horizontal expansion rate, and a vertical synchronizing signal and a vertical expansion rate.

7. A pixel interpolation circuit comprising:

an edge detecting circuit for obtaining a difference of levels between two pixels of four pixels adjacent to a pixel to be newly generated by means of interpolation, detecting existence of an edge component, and in case that the edge component exists, detecting that the edge component is which kind of edge component out of a skew edge, a longitudinal edge and a transversal edge;
a position detecting circuit for obtaining a spatial position relation of said pixel to be generated for said adjacent four pixels;
a coefficient generating circuit for generating weighting coefficients for the adjacent four pixels from a spatial position relation between said pixel to be generated and the adjacent four pixels and from the kind of the detected edge component, so that said coefficients become small for a pixel which can be the cause of damaging the edge component;
a multiplier for multiplying pixel values of the adjacent four pixels by the respective selected coefficients; and
a pixel converting circuit for conducting pixel-conversion of said pixel to be generated by applying a bilinear interpolation method to said multiplied result.

8. A pixel interpolation circuit according to claim 7, wherein said edge detecting circuit determines that the adjacent four pixels have skew edges in case that a difference of levels between certain one pixel and other three pixels exceeds a first threshold value of a high value, and a difference of levels between other three pixels is less than a second threshold value of a low value, and determines that the adjacent four pixels have longitudinal edges if a level difference between the pixels in a horizontal direction is less than the second threshold value, and a level difference between the pixels in a vertical direction exceeds the first threshold value, and determines that the adjacent four pixels have transversal edges if a level difference between the pixels in a vertical direction is less than the second threshold value, and a level difference between the pixels in a horizontal direction exceeds the first threshold value.

9. A pixel interpolation circuit according to claim 7, wherein said position detecting circuit obtains a spatial position relation in a horizontal direction and a vertical direction of the adjacent four pixels and the pixel to be generated from a horizontal synchronizing signal and a horizontal expansion rate, and a vertical synchronizing signal and a vertical expansion rate.

10. A pixel interpolation circuit comprising:

an edge detecting circuit for obtaining a difference of levels between two pixels of four pixels adjacent to a pixel to be newly generated, detecting existence of an edge component, and in case that the edge component exists, detecting that the edge component is which kind of edge component out of a skew edge, a longitudinal edge and a transversal edge;
a position detecting circuit for obtaining a spatial position relation of said pixel to be generated for said adjacent four pixels;
a coefficient generating circuit for generating weighting coefficients for the adjacent four pixels from a spatial position relation between said pixel to be generated and the adjacent four pixels and from the kind of the detected edge component by using a look-up table for showing a relation between a spatial position relation of the pixel to be generated and the weighting coefficients, so that said coefficients become small for a pixel which can be the cause of damaging the edge component; and
a pixel converting circuit for conducting pixel-conversion of said pixel to be generated by realizing a bilinear interpolation method by means of the look-up table, and combining the look-up table for conducting the bilinear interpolation and the look-up table of said coefficient generating circuit into one look-up table.

11. A pixel interpolation circuit according to claim 10, wherein said edge detecting circuit determines that the adjacent four pixels have skew edges in case that a difference of levels between certain one pixel and other three pixels exceeds a first threshold value of a high value, and a difference of levels between other three pixels is less than a second threshold value of a low value, and determines that the adjacent four pixels have longitudinal edges if a level difference between the pixels in a horizontal direction is less than the second threshold value, and a level difference between the pixels in a vertical direction exceeds the first threshold value, and determines that the adjacent four pixels have transversal edges if a level difference between the pixels in a vertical direction is less than the second threshold value, and a level difference between the pixels in a horizontal direction exceeds the first threshold value.

12. A pixel interpolation circuit according to claim 10, wherein said position detecting circuit obtains a spatial position relation in a horizontal direction and a vertical direction of the adjacent four pixels and the pixel to be generated from a horizontal synchronizing signal and a horizontal expansion rate, and a vertical synchronizing signal and a vertical expansion rate.

**Patentansprüche**

1. Pixel-Interpolationsverfahren, das die folgenden Schritte aufweist:

Erfassen eines Vorhandenseins einer Randkomponente eines Bildes aus vier Pixeln, die zu einem Pixel benachbart sind, das mittels einer Interpolation neu zu erzeugen ist, und in einem Fall, dass die Randkomponente vorhanden ist, weiterhin Erfassen, von welcher Art die Randkomponente ist, aus einem schrägen Rand, einem longitudinalen Rand und einem transversalen Rand;
Erzeugen von Gewichtungskoeffizienten für die benachbarten vier Pixel aus einer räumlichen Positionsbeziehung zwischen dem zu erzeugenden Pixel und den benachbarten vier Pixeln und aus der Art der erfassten Randkomponente, so dass die Koeffizienten für ein Pixel klein werden, welches die Ursache für ein Beschädigen der Randkomponente sein kann;
Multiplizieren von Pixelwerten der benachbarten vier Pixel mit den jeweiligen ausgewählten Koeffizienten; und
Durchführen einer Pixel-Umwandlung des zu erzeugenden Pixels durch Anwenden eines bilinearen Interpolationsverfahrens auf das multiplizierte Ergebnis.

2. Pixel-Interpolationsverfahren nach Anspruch 1, wobei der Schritt zum Erfassen eines Vorhandenseins einer Randkomponente in einem Fall, in welchem eine Differenz von Pegeln zwischen einem bestimmten Pixel und anderen drei Pixeln einen ersten Schwellenwert eines hohen Werts übersteigt und eine Differenz von Pegeln zwischen anderen drei Pixeln kleiner als ein zweiter Schwellenwert eines niedrigen Werts ist, bestimmt, dass die benachbarten vier Pixel schräge Ränder haben, und dann, wenn eine Pegeldifferenz zwischen den Pixeln in einer horizontalen Richtung kleiner als der zweite Schwellenwert ist und eine Pegeldifferenz zwischen den Pixeln in einer vertikalen Richtung den ersten Schwellenwert übersteigt, bestimmt, dass die benachbarten vier Pixel longitudinale Ränder haben, und dann, wenn eine Pegeldifferenz zwischen den Pixeln in einer vertikalen Richtung kleiner als der zweite Schwellenwert ist und eine Pegeldifferenz zwischen den Pixeln in einer horizontalen Richtung den ersten Schwellenwert übersteigt, bestimmt, dass die benachbarten vier Pixel transversale Ränder haben.

3. Pixel-Interpolationsverfahren nach Anspruch 1, wobei die räumliche Positionsbeziehung der vier Pixel als räumliche Positionsbeziehung in einer horizontalen Richtung und einer vertikalen Richtung der benachbarten vier Pixel und des zu erzeugenden Pixels aus einem horizontalen Synchronisierungssignal und einer horizontalen Ausdehnungsrate und einem vertikalen Synchronisierungssignal und einer vertikalen Ausdehnungsrate erhalten wird.

4. Pixel-Interpolationsverfahren, das die folgenden Schritte aufweist:

Erfassen eines Vorhandenseins einer Randkomponente eines Bildes aus vier Pixeln, die benachbart zu einem Pixel sind, das mittels einer Interpolation neu zu erzeugen ist, und in einem Fall, in welchem die Randkomponente vorhanden ist, weiterhin Erfassen, von welcher Art die Randkomponente ist, aus einem schrägen Rand, einem longitudinalen Rand und einem transversalen Rand;
Erzeugen von Gewichtungskoeffizienten für die benachbarten vier Pixel aus einer räumlichen Positionsbeziehung zwischen dem zu erzeugenden Pixel und den benachbarten vier Pixeln und aus der Art der erfassten Randkomponente durch Verwenden einer Nachschautabelle zum Zeigen einer Beziehung zwischen einer räumlichen Positionsbeziehung des zu erzeugenden Pixels und den Gewichtungskoeffizienten, so dass die Koeffizienten für ein Pixel klein werden, welches die Ursache für ein Beschädigen der Randkomponente sein kann; und
Durchführen einer Pixel-Umwandlung des zu erzeugenden Pixels durch Realisieren eines bilinearen Interpolationsverfahrens mittels der Nachschautabelle und durch Kombinieren der Nachschautabelle zum Durchführen der bilinearen Interpolation und der Nachschautabelle der Koeffizienten-Erzeugungsschaltung in eine Nachschautabelle.

5. Pixel-Interpolationsverfahren nach Anspruch 4,
   wobei der Schritt zum Erfassen eines Vorhandenseins einer Randkomponente in einem Fall, in welchem eine Differenz von Pegeln zwischen einem bestimmten Pixel und anderen drei Pixeln einen ersten Schwellenwert eines hohen Werts übersteigt und eine Differenz von Pegeln zwischen anderen drei Pixeln kleiner als ein zweiter Schwellenwert eines niedrigen Werts ist, bestimmt, dass die benachbarten vier Pixel schräge Ränder haben, und dann, wenn eine Pegeldifferenz zwischen den Pixeln in einer horizontalen Richtung kleiner als der zweite Schwellenwert ist und eine Pegeldifferenz zwischen den Pixeln in einer vertikalen Richtung den ersten Schwellenwert übersteigt, bestimmt, dass die benachbarten vier Pixel longitudinale Ränder haben, und dann, wenn eine Pegeldifferenz zwischen den Pixeln in einer vertikalen Richtung kleiner als der zweite Schwellenwert ist und eine Pegeldifferenz zwischen den Pixeln in einer horizontalen Richtung den ersten Schwellenwert übersteigt, bestimmt, dass die benachbarten vier Pixel transversale Ränder haben.

6. Pixel-Interpolationsverfahren nach Anspruch 4,
   wobei die räumliche Positionsbeziehung der vier Pixel als räumliche Positionsbeziehung in einer horizontalen Richtung und einer vertikalen Richtung der benachbarten vier Pixel und des zu erzeugenden Pixels aus einem horizontalen Synchronisierungssignal und einer horizontalen Ausdehnungsrate und einem vertikalen Synchronisierungssignal und einer vertikalen Ausdehnungsrate erhalten wird.

7. Pixel-Interpolationsschaltung, die folgendes aufweist:

   eine Rand-Erfassungsschaltung zum Erhalten einer Differenz von Pegeln zwischen zwei Pixeln aus vier Pixeln, die benachbart zu einem Pixel sind, das mittels einer Interpolation neu zu erzeugen ist, zum Erfassen eines Vorhandenseins einer Randkomponente, und in einem Fall, in welchem die Randkomponente vorhanden ist, zum Erfassen, von welcher Art von Randkomponente die Randkomponente ist, aus einem schrägen Rand, einem longitudinalen Rand und einem transversalen Rand;
   eine Positions-Erfassungsschaltung zum Erhalten einer räumlichen Positionsbeziehung des zu erzeugenden Pixels für die benachbarten vier Pixel; und
   eine Koeffizienten-Erzeugungsschaltung zum Erzeugen von Gewichtungskoeffizienten für die benachbarten vier Pixel aus einer räumlichen Positionsbeziehung zwischen dem zu erzeugenden Pixel und den benachbarten vier Pixeln und aus der Art der erfassten Randkomponente, so dass die Koeffizienten für ein Pixel klein werden, welches die Ursache für ein Beschädigen der Randkomponente sein kann;
   einen Multiplizierer zum Multiplizieren von Pixelwerten der benachbarten vier Pixel mit den jeweiligen ausgewählten Koeffizienten; und
   eine Pixel-Umwandlungsschaltung zum Durchführen einer Pixel-Umwandlung des zu erzeugenden Pixels durch Anwenden eines bilinearen Interpolationsverfahrens auf das multiplizierte Ergebnis.

8. Pixel-Interpolationsschaltung nach Anspruch 7,
   wobei die Rand-Erfassungsschaltung in einem Fall, in welchem eine Differenz von Pegeln zwischen einem bestimmten Pixel und anderen drei Pixeln einen ersten Schwellenwert eines hohen Werts übersteigt und eine Differenz von Pegeln zwischen anderen drei Pixeln kleiner als ein zweiter Schwellenwert eines niedrigen Werts ist, bestimmt, dass die benachbarten vier Pixel schräge Ränder haben, und dann, wenn eine Pegeldifferenz zwischen den Pixeln in einer horizontalen Richtung kleiner als der zweite Schwellenwert ist und eine Pegeldifferenz zwischen den Pixeln in einer vertikalen Richtung den ersten Schwellenwert übersteigt, bestimmt, dass die benachbarten vier Pixel longitudinale Ränder haben, und dann, wenn eine Pegeldifferenz zwischen den Pixeln in einer vertikalen Richtung kleiner als der zweite Schwellenwert ist und eine Pegeldifferenz zwischen den Pixeln in einer horizontalen Richtung den ersten Schwellenwert übersteigt, bestimmt, dass die benachbarten vier Pixel transversale Ränder haben.

9. Pixel-Interpolationsschaltung nach Anspruch 7,
   wobei die Positions-Erfassungsschaltung eine räumliche Positionsbeziehung in einer horizontalen Richtung und einer vertikalen Richtung der benachbarten vier Pixel und des zu erzeugenden Pixels aus einem horizontalen Synchronisierungssignal und einer horizontalen Ausdehnungsrate und einem vertikalen Synchronisierungssignal und einer vertikalen Ausdehnungsrate erhält.

10. Pixel-Interpolationsschaltung, die folgendes aufweist:

    eine Rand-Erfassungsschaltung zum Erhalten einer Differenz von Pegeln zwischen zwei Pixeln aus vier Pixeln, die benachbart zu einem Pixel sind, das neu zu erzeugen ist, zum Erfassen eines Vorhandenseins einer Randkomponente, und in einem Fall, in welchem die Randkomponente vorhanden ist, zum Erfassen, von welcher Art von Randkomponente die Randkomponente ist, aus einem schrägen Rand, einem longitudinalen Rand und einem transversalen Rand;

eine Positions-Erfassungsschaltung zum Erhalten einer räumlichen Positionsbeziehung des zu erzeugenden Pixels für die benachbarten vier Pixel;

eine Koeffizienten-Erzeugungsschaltung zum Erzeugen von Gewichtungskoeffizienten für die benachbarten vier Pixel aus einer räumlichen Positionsbeziehung zwischen dem zu erzeugenden Pixel und den benachbarten vier Pixeln und aus der Art der erfassten Randkomponente durch Verwenden einer Nachschautabelle zum Zeigen einer Beziehung zwischen einer räumlichen Positionsbeziehung des zu erzeugenden Pixels und der Gewichtungskoeffizienten, so dass die Koeffizienten für ein Pixel klein werden, welches die Ursache für ein Beschädigen der Randkomponente sein kann; und

eine Pixel-Umwandlungsschaltung zum Durchführen einer Pixel-Umwandlung des zu erzeugenden Pixels durch Realisieren eines bilinearen Interpolationsverfahrens mittels der Nachschautabelle und durch Kombinieren der Nachschautabelle zum Durchführen der bilinearen Interpolation und der Nachschautabelle der Koeffizienten-Erzeugungsschaltung in eine Nachschautabelle.

11. Pixel-Interpolationsschaltung nach Anspruch 10, wobei die Rand-Erfassungsschaltung in einem Fall, in welchem eine Differenz von Pegeln zwischen einem bestimmten Pixel und anderen drei Pixeln einen ersten Schwellenwert eines hohen Werts übersteigt und eine Differenz von Pegeln zwischen anderen drei Pixeln kleiner als ein zweiter Schwellenwert eines niedrigen Werts ist, bestimmt, dass die benachbarten vier Pixel schräge Ränder haben, und dann, wenn eine Pegeldifferenz zwischen den Pixeln in einer horizontalen Richtung kleiner als der zweite Schwellenwert ist und eine Pegeldifferenz zwischen den Pixeln in einer vertikalen Richtung den ersten Schwellenwert übersteigt, bestimmt, dass die benachbarten vier Pixel longitudinale Ränder haben, und dann, wenn eine Pegeldifferenz zwischen den Pixeln in einer vertikalen Richtung kleiner als der zweite Schwellenwert ist und eine Pegeldifferenz zwischen den Pixeln in einer horizontalen Richtung den ersten Schwellenwert übersteigt, bestimmt, dass die benachbarten vier Pixel transversale Ränder haben.

12. Pixel-Interpolationsschaltung nach Anspruch 10, wobei die Positions-Erfassungsschaltung eine räumliche Positionsbeziehung in einer horizontalen Richtung und einer vertikalen Richtung der benachbarten vier Pixel und des zu erzeugenden Pixels aus einem horizontalen Synchronisierungssignal und einer horizontalen Ausdehnungsrate und einem vertikalen Synchronisierungssignal und einer vertikalen Ausdehnungsrate erhält.

## Revendications

1. Procédé d'interpolation d'éléments d'image, comprenant les étapes suivantes :

    détecter l'existence d'une composante de bord d'une image, à partir de quatre éléments d'image adjacents à un élément d'image qui doit être nouvellement produit au moyen d'une interpolation et, si la composante de bord existe, détecter en outre le type de composante de bord auquel appartient la composante de bord, parmi un bord oblique, un bord longitudinal et un bord transversal ;
    générer de coefficients de pondération pour les quatre éléments d'image adjacents, à partir d'une relation de position spatiale entre ledit élément d'image à produire et les quatre éléments d'image adjacents, ainsi qu'à partir du type de la composante de bord détectée, de telle sorte que lesdits coefficients deviennent petits pour un élément d'image qui peut être la cause d'un endommagement de la composante de bord ;
    multiplier les valeurs d'élément d'image des quatre éléments d'image adjacents, par les coefficients sélectionnés respectifs ; et
    exécuter la conversion en élément d'image dudit élément d'image à produire, en appliquant un procédé d'interpolation bilinéaire audit résultat multiplié.

2. Procédé d'interpolation d'éléments d'image selon la revendication 1, dans lequel ladite étape de détection de l'existence d'une composante de bord détermine que les quatre éléments d'image adjacents ont des bords obliques si une différence de niveaux entre un certain élément d'image et les trois autres éléments d'image dépasse une première valeur de seuil ayant une valeur élevée, et si une différence de niveaux entre trois autres éléments d'image est inférieure à une seconde valeur de seuil ayant une faible valeur, et elle détermine que les quatre éléments d'image adjacents ont des bords longitudinaux si une différence de niveaux entre les éléments d'image dans une direction horizontale est inférieure à la seconde valeur de seuil, et si une différence de niveaux entre les éléments d'image dans une direction verticale dépasse la première valeur de seuil, et elle détermine que les quatre éléments d'image adjacents ont des bords transversaux si une différence de niveaux entre les éléments d'image dans une direction verticale est inférieure à la seconde valeur de seuil, et si une différence de niveaux entre les éléments d'image dans une direction horizontale dépasse la première valeur de seuil.

3. Procédé d'interpolation d'éléments d'image selon la revendication 1,

dans lequel ladite relation de position spatiale desdits quatre éléments d'image est obtenue en tant que relation de position spatiale dans une direction horizontale et dans une direction verticale des quatre éléments d'image adjacents et de l'élément d'image à produire, à partir d'un signal de synchronisation horizontale et d'un taux de dilatation horizontale, ainsi qu'à partir d'un signal de synchronisation verticale et d'un taux de dilatation verticale.

4. Procédé d'interpolation d'éléments d'image, comprenant les étapes suivantes :

détecter l'existence d'une composante de bord d'une image, à partir de quatre éléments d'image adjacents à un élément d'image qui doit être nouvellement produit au moyen d'une interpolation et, si la composante de bord existe, détecter en outre le type de composante de bord auquel appartient la composante de bord, parmi un bord oblique, un bord longitudinal et un bord transversal ;

générer des coefficients de pondération pour les quatre éléments d'image adjacents à partir d'une relation de position spatiale entre ledit élément d'image à produire et les quatre éléments d'image adjacents, ainsi qu'à partir du type de la composante de bord détectée, en utilisant une table à consulter pour montrer une relation entre une relation de position spatiale de l'élément d'image à produire et les coefficients de pondération, de telle sorte que lesdits coefficients deviennent petits pour un élément d'image qui peut être la cause d'un endommagement de la composante de bord ; et

exécuter la conversion en élément d'image dudit élément d'image à produire, en mettant en oeuvre un procédé d'interpolation bilinéaire au moyen de la table à consulter, et en combinant la table à consulter servant à l'exécution de l'interpolation bilinéaire et la table à consulter dudit circuit générateur de coefficients en une seule table à consulter.

5. Procédé d'interpolation d'éléments d'image selon la revendication 4,

dans lequel ladite étape de détection de l'existence d'une composante de bord détermine que les quatre éléments d'image adjacents ont des bords obliques si une différence de niveaux entre un certain élément d'image et trois autres éléments d'image dépasse une première valeur de seuil ayant une valeur élevée, et si une différence de niveaux entre trois autres éléments d'image est inférieure à une seconde valeur de seuil ayant une faible valeur, et elle détermine que les quatre éléments d'image adjacents ont des bords longitudinaux si une différence de niveaux entre les éléments d'image dans une direction horizontale est inférieure à la seconde valeur de seuil, et si une différence de niveaux entre les éléments d'image dans une direction verticale dépasse la première valeur de seuil, et elle détermine que les quatre éléments d'image adjacents ont des bords transversaux si une différence de niveaux entre les éléments d'image dans une direction verticale est inférieure à la seconde valeur de seuil, et si une différence de niveaux entre les éléments d'image dans une direction horizontale dépasse la première valeur de seuil.

6. Procédé d'interpolation d'éléments d'image selon la revendication 4,

dans lequel ladite relation de position spatiale desdits quatre éléments d'image est obtenue en tant que relation de position spatiale dans une direction horizontale et dans une direction verticale des quatre éléments d'image adjacents et de l'élément d'image à produire, à partir d'un signal de synchronisation horizontale et d'un taux de dilatation horizontale, ainsi qu'à partir d'un signal de synchronisation verticale et d'un taux de dilatation verticale.

7. Circuit d'interpolation d'éléments d'image, comprenant :

un circuit de détection de bord, servant à obtenir une différence de niveaux, entre deux éléments d'image parmi quatre éléments d'image adjacents à un élément d'image qui doit être nouvellement produit au moyen d'une interpolation, et prévu pour détecter l'existence d'une composante de bord et, si la composante de bord existe, pour détecter le type de composante de bord auquel appartient la composante de bord, parmi un bord en oblique, un bord longitudinal et un bord transversal ;

un circuit de détection de position, servant à obtenir une relation de position spatiale dudit élément d'image à produire pour lesdits quatre éléments d'image adjacents ;

un circuit générateur de coefficients, servant à produire des coefficients de pondération pour les quatre éléments d'image adjacents, à partir d'une relation de position spatiale entre ledit élément d'image à produire et les quatre éléments d'image adjacents, ainsi qu'à partir du type de la composante de bord détectée, de telle sorte que lesdits coefficients deviennent petits pour un élément d'image qui peut être la cause d'un endommagement de la composante de bord ;

un multiplicateur pour multiplier les valeurs d'élément d'image des quatre éléments d'image adjacents, par les coefficients sélectionnés respectifs ; et

un circuit de conversion en élément d'image pour procéder à la conversion en élément d'image dudit élément d'image à produire, en appliquant un procédé d'interpolation bilinéaire audit résultat multiplié.

8.  Circuit d'interpolation d'éléments d'image selon la revendication 7,

dans lequel ledit circuit de détection de bord détermine que les quatre éléments d'image adjacents ont des bords obliques si une différence de niveaux entre un certain élément d'image et trois autres éléments d'image dépasse une première valeur de seuil ayant une valeur élevée, et si une différence de niveaux entre trois autres éléments d'image est inférieure à une seconde valeur de seuil ayant une faible valeur, et il détermine que les quatre éléments d'image adjacents ont des bords longitudinaux si une différence de niveaux entre les éléments d'image dans une direction horizontale est inférieure à la seconde valeur de seuil, et si une différence de niveaux entre les éléments d'image dans une direction verticale dépasse la première valeur de seuil, et il détermine que les quatre éléments d'image adjacents ont des bords transversaux si une différence de niveaux entre les éléments d'image dans une direction verticale est inférieure à la seconde valeur de seuil, et si une différence de niveaux entre les éléments d'image dans une direction horizontale dépasse la première valeur de seuil.

9.  Circuit d'interpolation d'éléments d'image selon la revendication 7,

dans lequel ledit circuit de détection de position obtient une relation de position spatiale dans une direction horizontale et dans une direction verticale des quatre éléments d'image adjacents et de l'élément d'image à produire, à partir d'un signal de synchronisation horizontale et d'un taux de dilatation horizontale, ainsi qu'à partir d'un signal de synchronisation verticale et d'un taux de dilatation verticale.

10.  Circuit d'interpolation d'éléments d'image, comprenant :

un circuit de détection de bord, pour l'obtention d'une différence de niveaux entre deux éléments d'image parmi quatre éléments d'image adjacents à un élément d'image qui doit être nouvellement produit, pour la détection de l'existence d'une composante de bord et, si la composante de bord existe, pour la détection en outre du type de composante de bord auquel appartient la composante de bord, parmi un bord oblique, un bord longitudinal et un bord transversal ;

un circuit de détection de position, servant à obtenir une relation de position spatiale dudit élément d'image à produire pour lesdits quatre éléments d'image adjacents ;

un circuit générateur de coefficients, servant à produire des coefficients de pondération pour les quatre éléments d'image adjacents, à partir d'une relation de position spatiale entre ledit élément d'image à produire et les quatre éléments d'image adjacents, ainsi qu'à partir du type de la composante de bord détectée, en utilisant une table à consulter pour montrer une relation entre une relation de position spatiale de l'élément d'image à produire et les coefficients de pondération, de telle sorte que lesdits coefficients deviennent petits pour un élément d'image qui peut être la cause d'un endommagement de la composante de bord ; et

un circuit de conversion en élément d'image pour l'exécution de la conversion en élément d'image dudit élément d'image à produire, en mettant en oeuvre un procédé d'interpolation bilinéaire au moyen de la table à consulter, et en combinant la table à consulter servant à l'exécution de l'interpolation bilinéaire et la table à consulter dudit circuit générateur de coefficients en une seule table à consulter.

11.  Circuit d'interpolation d'éléments d'image selon la revendication 10,

dans lequel ledit circuit de détection de bord détermine que les quatre éléments d'image adjacents ont des bords obliques si une différence de niveaux entre un certain élément d'image et trois autres éléments d'image dépasse une première valeur de seuil ayant une valeur élevée, et si une différence de niveaux entre trois autres éléments d'image est inférieure à une seconde valeur de seuil ayant une faible valeur, et il détermine que les quatre éléments d'image adjacents ont des bords longitudinaux si une différence de niveaux entre les éléments d'image dans une direction horizontale est inférieure à la seconde valeur de seuil, et si une différence de niveaux entre les éléments d'image dans une direction verticale dépasse la première valeur de seuil, et il détermine que les quatre éléments d'image adjacents ont des bords transversaux si une différence de niveaux entre les éléments d'image dans une direction verticale est inférieure à la seconde valeur de seuil, et si une différence de niveaux entre les éléments d'image dans une direction horizontale dépasse la première valeur de seuil.

12. Circuit d'interpolation d'éléments d'image selon la revendication 10,

dans lequel ledit circuit de détection de position obtient une relation de position spatiale dans une direction horizontale et dans une direction verticale des quatre éléments d'image adjacents et de l'élément d'image à produire, à partir d'un signal de synchronisation horizontale et d'un taux de dilatation horizontale, ainsi qu'à partir d'un signal de synchronisation verticale et d'un taux de dilatation verticale.

# FIG. 1

VIDEO SIGNAL

2 A/D

1

3 D

4 LINE MEMORY

5 D

6

P(i, j)

P(i+1, j)

P(i, j+1)

P(i+1, j+1)

8 ⊗ XCo00

9 ⊗ XCo10

10 ⊗ XCo01

11 ⊗ XCo11

7 EDGE DETECTING CIRCUIT

12 COEFFICIENT GENERATING CIRCUIT

BILINEAR INTERPOLATION CIRCUIT

18

13 DOT CLOCK

14 SYNCHRONIZING SIGNAL

15 EXPANSION DATA

16 RESIZING CLOCK

17

TIMING GENERATING CIRCUIT

EP 1 067 774 B1

# FIG. 2

P(i, j) ○ —————— ● P(i+1, j)

Pq(u, v)  ⊘        Pr(u, v)  ⊘

P(i, j+1) ● —————— ● P(i+1, j+1)

# FIG. 3

P(i, j) ○ —————— ○ P(i+1, j)

⊘ Pq(u, v)

⊘ Pr(u, v)

P(i, j+1) ● —————— ● P(i+1, j+1)

## FIG. 4

## FIG. 5

HORIZONTAL / VERTICAL SPATIAL DISTANCE

FIG. 6

# Fig. 7

[Table 1]

| a | - | - | Positive | Negative |
|---|---|---|---|---|
| b | Positive | Negative | - | - |
| c | - | - | Negative | Positive |
| d | Negative | Positive | - | - |
| Determination | Longitudinal Edge | Longitudinal Edge | Transversal Edge | Transversal Edge |

| a | Positive | Negative | Negative | Positive | - | - | - | - |
|---|---|---|---|---|---|---|---|---|
| b | - | - | Positive | Negative | - | - | Negative | Positive |
| c | - | - | - | - | Negative | Positive | Positive | Negative |
| d | Negative | Positive | - | - | Positive | Negative | - | - |
| Determination | Skew edge 1 | Skew edge 1 | Skew edge 2 | Skew edge 2 | Skew edge 3 | Skew edge 3 | Skew edge 4 | Skew edge 4 |

Positive: The difference exceeds a threshold value and has a positive value.

Negative: The difference exceeds a threshold value and has a negative value.

-: The difference does not exceed a threshold value.

The skew edge 1: $P(i, j)$ has an edge component. The skew edge 2: $P(i+1, j)$ has an edge component.
The skew edge 3: $P(i, j+1)$ has an edge component. The skew edge 4: $P(i+1, j+1)$ has an edge component.

EP 1 067 774 B1